# EUROPEAN PATENT SPECIFICATION

(11) **EP 2 858 422 B1**
(45) Date of publication and mention of the grant of the patent: **20.06.2018**
(21) Application number: 13794465.8
(22) Date of filing: 09.01.2013
(51) Int. Cl.: H04W 48/16, H04W 24/00, H04W 88/02, H04W 56/00, H04W 76/02

(54) **TERMINAL DEVICE DISCOVERY METHOD, DEVICE AND SYSTEM**
VERFAHREN, VORRICHTUNG UND SYSTEM ZUR ERKENNUNG VON ENDGERÄTEN
PROCÉDÉ, DISPOSITIF ET SYSTÈME DE RECHERCHE DE DISPOSITIF FORMANT TERMINAL

(30) Priority: 24.05.2012 CN 201210164361
(43) Date of publication of application: 08.04.2015
(73) Proprietor: Huawei Technologies Co., Ltd., Longgang District Shenzhen, Guangdong 518129 (CN)
(72) Inventor: CHANG, Junren, Shenzhen Guangdong 518129 (CN)
(74) Representative: Isarpatent
(86) International application number: PCT/CN2013/070282
(87) International publication number: WO 2013/174154

(56) References cited:
- WO-A1-2010/035100
- WO-A1-2011/130630
- WO-A2-2004/077920
- WO-A2-2010/078271
- WO-A2-2011/130623
- CN-A- 1 527 623
- CN-A- 102 265 699
- US-A1- 2009 046 683

## Description

### FIELD

The present invention relates to the technical field of communication, in particular to a terminal device discovery method, device and system.

### BACKGROUND

At present, it is a waste of radio resource to transmit information between two adjacent terminal devices in a network via an evolved NodeB (Evolved NodeB, eNodeB). For example, it may save a half of radio resource to transmit data directly between two adjacent devices than to transmit the data via a base station. The method for communicating directly between two adjacent devices is referred to as D2D (Device to Device, D2D). In D2D communication, two terminal devices adopt spectrum resources of radio communication network. With the development of smart phone, it is more common to transmit data between two adjacent user devices, such as sharing data or playing game by networking between two adjacent user devices. Therefore, it is getting more important for the public to communicate directly between two user devices.

The conventional method for establishing D2D network includes: in a case that a first terminal device and a second terminal device are to be connected in a D2D manner, the first terminal device may send a request to a network where the first terminal device resides. Multiple base stations of the network detect the second terminal device, and each base station sends a paging message to the second terminal device, where the paging message includes preamble distributed to the second terminal device by the base station, and the base station notifies the first terminal device of information of the preamble. The second terminal device sends the preamble via a random access channel of a cell network, after the first terminal device detects for the preamble sent by the second terminal device in the random access channel of the cell network. In a case that the preamble is detected, it may be determined whether the first terminal device and the second terminal device can be connected in a D2D manner. The first terminal device presets a threshold of signal intensity, and it may be determined that the first terminal device and the second terminal device can be connected in a D2D manner in a case that a signal intensity of the preamble is greater than the threshold of signal intensity, then the base station may send a command for D2D mode to the first terminal device and the second terminal device, in a way that a D2D network is established.

Each base station may send a paging message with preamble within its own area when detecting for the second terminal, thus the preamble may be wasted, and the wasted preamble may not be applied by other pagings within a certain period of time, thereby influencing the performance of the random access channels of other terminal devices of the base station.

WO 2010/035100 A1 discloses a method for synchronization for device-to-device communication. The method may include repeatedly sending synchronization messages to the second mobile station until receiving a synchronization acknowledgment message from the second mobile station. The method may also include receiving the synchronization acknowledgment message from the second mobile station.

WO 2010/078271 A2 discloses an example of peer discovery pilot transmission for a case in which a station desires to communicate with a specific station. The eNB may then instruct one or both stations to transmit peer discovery pilots. The eNB may also inform a receiving station to detect for a peer discovery pilot from a transmitting station

### SUMMARY

The objectives of the present invention are achieved through the subject-matter of the independent claims 1, 2, 5 and 6, respectively claiming terminal device discovery methods and corresponding terminal devices. Preferred embodiments are set out in the dependent claims.

Embodiments not covered by the claims are to be regarded merely as examples. It is to provide a terminal device discovery method, device and system, which may save the resource of preamble when the base station searching for terminal device.

In view of this, the technical solution is described as follows.

A terminal device discovery method, including:
acquiring, by a first terminal device, information about synchronizing signals of one or more cells within a base station, where the base station is a base station where the first terminal device or a second terminal device resides;
detecting, by the first terminal device, for a synchronizing signal sent by the second terminal device, based on the information about the synchronizing signals of the one or more cells and obtain an intensity of the synchronizing signal, to discover the second terminal device via the synchronizing signal, where the second terminal device acquires parameter information about sending the synchronizing signal and sends the synchronizing signal based on the parameter information, where the parameter information comprises information about sending the synchronizing signal, and where the synchronizing signal sent by the second terminal device is one of the synchronizing signals of the one or more cells,
where after obtaining an intensity of the synchronizing signal, the method further comprises:
   determining, by the first terminal device, based on the intensity of the synchronizing signal, whether a D2D network connection can be established between the first terminal device and the second terminal device and sending a determining result to the base station; and
   sending, by the first terminal device, information about the intensity of the synchronizing signal to the base station,
   where detecting, by the first terminal device, a synchronizing signal sent by the second terminal device, based on the information about the synchronizing signals of the one or more cells and obtain an intensity of the synchronizing signal comprises:
      acquiring, by the first terminal device, based on an identifier of the second terminal device, the location of the time-frequency resource at which the synchronizing signal sent by the second terminal device; and
      detecting, by the first terminal device, the synchronizing signal and obtaining the intensity of the synchronizing signal at the time-frequency resource, based on the information about the synchronizing signals of the cell where the first terminal device or the second terminal device runs, wherein the cell where the first terminal device or the second terminal device runs is one of the one or more cells, and
      where determining, by the first terminal device, based on the intensity of the synchronizing signal, whether a D2D network connection can be established between the first terminal device and the second terminal device and sending a determining result to the base station comprises:
         determining, by the first terminal device, based the obtained intensity of the synchronizing signal, whether the first terminal device and the second terminal device run in a coverage area of a same base station or a same cell; sending in instruction information indicating whether the first terminal device and the second terminal devices run in a coverage area of a same base station or a same cell to the base station as the determining result.

A terminal device discovery method, including:
acquiring, by a second terminal device, parameter information about sending a synchronizing signal, where the synchronizing signal is one of synchronizing signals of one or more cells within a base station, and the base station is a base station where a first terminal device or the second terminal device resides, where the parameter information includes information about sending a synchronizing signal; and
sending, by the second terminal device, the synchronizing signal based on the parameter information, so that the first terminal device detects the synchronizing signal and obtains the intensity of the synchronizing signal at a time-frequency resource, which is acquired by the first terminal device based on an identifier of the second terminal device, based on the information about the synchronizing signals of the cell where the first terminal device or the second terminal device runs, determines, based the obtained intensity of the synchronizing signal, whether the first terminal device and the second terminal device run in a coverage area of a same base station or a same cell, and sends instruction information indicating whether the first terminal device and the second terminal devices run in a coverage area of a same base station or a same cell to the base station as a determining result and sends information about the intensity of the synchronizing signal to the base station.

A terminal device discovery method, including:
sending a message to a second terminal device, where the message is for instructing the second terminal device to send a synchronizing signal, where the synchronizing signal is one of synchronizing signals of one or more cells within a base station, and the base station is a base station where a first terminal device or the second terminal device resides;
sending the information of the synchronizing signals of the one or more cells within the base station to the first terminal device; and
receiving instruction information sent by the first terminal device, where the instruction information includes a determining result made by the first terminal device which indicates whether a D2D network connection can be established between the first terminal and the second terminal device based on the intensity of the synchronizing signal, or includes the intensity of the synchronizing signal received by the first terminal device from the second terminal device.

A first terminal device, including:
a first acquiring unit, configured to acquire information about synchronizing signals of one or more cells within a base station, where the base station is a base station where the first terminal device or a second terminal device resides;
a first detecting unit, configured to detect for a synchronizing signal sent by the second terminal device, based on the information about the synchronizing signals of the one or more cells and obtain an intensity of the synchronizing signal, to discover the second terminal device via the synchronizing signal, where the second terminal device acquires parameter information about sending the synchronizing signal and sends the synchronizing signal based on the parameter information, where the parameter information comprises information about sending the synchronizing signal, and where the synchronizing signal sent by the second terminal device is one of the synchronizing signals of the one or more cells;
a first determining unit, configured to determine whether a D2D network connection can be established between the first terminal device and the second terminal device, based on the intensity of the synchronizing signal; and
a first sending unit, configured to send a determining result to the base station, and further configured to send the intensity of the synchronizing signal to the base station,
where the first detecting unit comprises:
a first time-frequency resource location acquiring module, configured to acquire a location of time-frequency resource at which the second terminal device sends the synchronizing signal, based on the identifier of the second terminal device; and
a first detecting module, configured to detect the synchronizing signal and acquire an intensity of the synchronizing signal at the time-frequency resource, based on the information about the synchronizing signals of the cell where the first terminal device or the second terminal device runs, wherein the cell where the first terminal device or the second terminal device runs is one of the one or more cells, and
where the first determining unit is configured to:
   determine whether the first terminal device and the second terminal device run within a coverage area of a same base station or a same cell, based the obtained intensity of the synchronizing signal;
   the first sending unit is configured to send the instruction information indicating whether the first terminal device and the second terminal devices run within a coverage area of a same base station or a same cell to the base station as a determining result.

A second terminal device, including:
a second acquiring unit, configured to acquire parameter information about sending a synchronizing signal, where the synchronizing signal is one of synchronizing signals of one or more cells within a base station, and the base station is a base station where a first terminal device or the second terminal device resides, where the parameter information includes information about sending the synchronizing signal; and
a second sending unit, configured to send the synchronizing signal based on the parameter information, so that the first terminal device detects the synchronizing signal and obtains the intensity of the synchronizing signal at a time-frequency resource, which is acquired by the first terminal device based on an identifier of the second terminal device, based on the information about the synchronizing signals of the cell where the first terminal device or the second terminal device runs, determines, based the obtained intensity of the synchronizing signal, whether the first terminal device and the second terminal device run in a coverage area of a same base station or a same cell, and sends instruction information indicating whether the first terminal device and the second terminal devices run in a coverage area of a same base station or a same cell to the base station as a determining result and sends the intensity of the synchronizing signal to the base station.

Abase station, including:
a third sending unit, configured to send a message to a second terminal device, where the message is for instructing the second terminal device to send a synchronizing signal, where the synchronizing signal is one of synchronizing signals of one or more cells within the base station, and the base station is a base station where a first terminal device or the second terminal device resides;
a fourth sending unit, configured to send the information of the synchronizing signals of the one or more cells within the base station to the first terminal device; and
a second receiving unit, configured to receive instruction information sent by the first terminal device, where the instruction information includes a determining result made by the first terminal device which indicates whether a D2D network connection can be established between the first terminal device and the second terminal device based on an intensity of the synchronizing signal, or includes the intensity of the synchronizing signal received by the first terminal device from the second terminal device.

A terminal device discovery system, including a first terminal device, a second terminal device and a base station, where
the first terminal device is configured to acquire information of synchronizing signals of one or more cells within the base station where the first terminal device or the second terminal device resides, and detect a synchronizing signal sent by the second terminal device based on the information of the synchronizing signals of the one or more cells, and obtain an intensity of the synchronizing signal to discover the second terminal device through the synchronizing signal, where the synchronizing signal sent by the second terminal is one of the synchronizing signals of the one or more cells;
the second terminal device is configured to acquire parameter information of sending synchronizing signal, where the synchronizing signal is one of the synchronizing signals of the one or more cells within the base station, where the base station is a base station where the first terminal device or the second terminal device resides, where the parameter information includes information of sending the synchronizing signal; and send the synchronizing signal based on the parameter information, where the synchronizing signal is detected by the first terminal device, and the intensity of the synchronizing signal is obtained by the first terminal device; and
the base station is configured to send a message to the second terminal device to instruct the second terminal device to send the synchronizing signal, where the synchronizing signal is one of the synchronizing signals of the one or more cells within the base station, where the base station is a base station where the first terminal device or the second terminal device resides, and send the information of the synchronizing signal of the one or more cells within the base station and receive instruction information sent by the first terminal device, where the instruction information includes a determining result made by the first terminal device which indicates whether a D2D network connection can be established between the first terminal device and the second terminal device, or includes the intensity of the synchronizing signal received by the first terminal device from the second terminal device.

According to the terminal device discovery method, device and system, the first terminal device acquires the information of the synchronizing signals of one or more cells of within the base station where the first terminal device or the second terminal devices resides; the first terminal device detects a synchronizing signal sent by the second terminal device, based on the information of the synchronizing signals of the one or more cells and obtains an intensity of the synchronizing signal to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

### BRIEF DESCRIPTION OF THE DRAWINGS

In order to clearly specify the technical solutions according to the embodiments of the invention and the conventional technologies, the drawings in the embodiments and the conventional technical solutions may be briefly described. Obviously, the following drawings are only a few of the embodiments of the invention, and those skilled in the art may obtain other drawings according to these drawings without creative work.
Figure 1 is a flowchart 1 showing a terminal device discovery method provided according to an embodiment of the invention;
Figure 2 is a flowchart 2 showing a terminal device discovery method provided according to an embodiment of the invention;
Figure 3 is a flowchart 3 showing a terminal device discovery method provided according to an embodiment of the invention;
Figure 4 is a flowchart 1 showing a terminal device discovery method provided according to another embodiment of the invention;
Figure 5 is a flowchart 2 showing a terminal device discovery method provided according to another embodiment of the invention;
Figure 6 is a flowchart 1 showing a terminal device discovery method provided according to yet another embodiment of the invention;
Figure 7 is a flowchart 2 showing a terminal device discovery method provided according to yet another embodiment of the invention;
Figure 8 is a schematic structure diagram 1 of a first terminal device provided according to an embodiment of the invention;
Figure 9 is a schematic structure diagram 2 of a first terminal device provided according to an embodiment of the invention;
Figure 10 is a schematic structure diagram 1 of a second terminal device provided according to an embodiment of the invention;
Figure 11 is a schematic structure diagram 2 of a second terminal device provided according to an embodiment of the invention;
Figure 12 is a schematic structure diagram 1 of a base station provided according to an embodiment of the invention;
Figure 13 is a schematic structure diagram 2 of a base station provided according to an embodiment of the invention; and
Figure 14 is a schematic structure diagram of a terminal device discovery system provided according to an embodiment of the invention.

### DETAILED DESCRIPTION OF EMBODIMENTS

To make the solutions provided in the invention better understood by those skilled in the art, the technical solutions provided according to the embodiment of the invention may be described in details in conjunction with the drawings used in the embodiment of the invention. Obviously, the embodiments described in the following are only a few of the embodiments of the invention, other embodiments made by those skilled in the art without creatively work based on the embodiments of the invention, fall into the protection scope of the invention.

To clarify the advantages of the technical solution provided according to the embodiments of the invention, the invention may be described in detail in conjunction with drawings and embodiments.

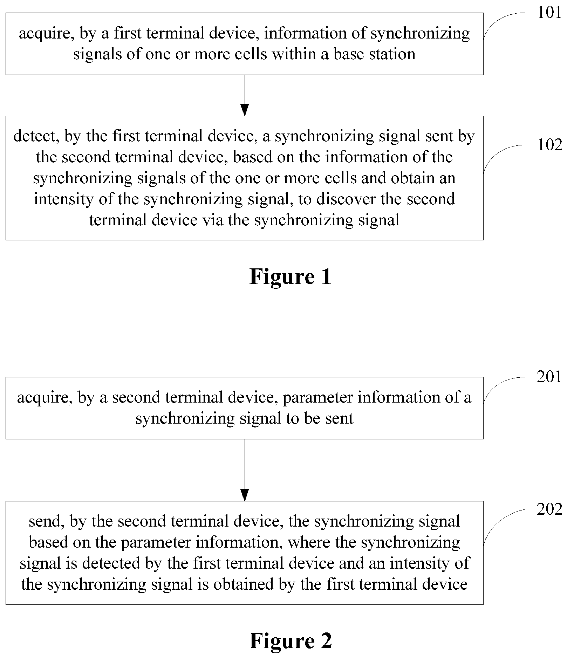

A terminal device discovery method provided according to an embodiment of the invention is shown in Figure 1. The method is described from a first terminal device side, and includes the steps from Step 101 and Step 102.

Step 101 is to acquire, by a first terminal device, information of synchronizing signals of one or more cells within a base station.

The base station is a base station where the first terminal device or a second terminal device resides.

By acquiring synchronizing signal information of the base stations where the first terminal device and the second terminal device reside respectively, the first terminal device may learn the synchronizing signal information of the cells which may be sent by the second terminal device potentially, in a way that the synchronizing signal may be detected.

Step 102 is to detect, by the first terminal device, a synchronizing signal sent by the second terminal device, based on the information of the synchronizing signals of the one or more cells and obtain an intensity of the synchronizing signal, to discover the second terminal device via the synchronizing signal.

The synchronizing signal sent by the second terminal device is one of the synchronizing signals of the one or more cells. When the first terminal device performing a detection based on the information of the synchronizing signals, it is indicated that the first terminal device discovers the second terminal device in a case that the first terminal device detects the synchronizing signal successfully, i.e., the first terminal device obtains an intensity of the synchronizing signal sent by the first terminal device by the detection.

The synchronizing signal may be at least one of a primary synchronizing signal and a secondary synchronizing signal.

A terminal device discovery method provided according to an embodiment of the invention is shown in Figure 2. The method is described from a second terminal device side, and includes the steps from Step 201 and Step 202.

Step 201 is to acquire, by a second terminal device, parameter information of sending a synchronizing signal.

The synchronizing signal is one of synchronizing signals of one or more cells within a base station, and the base station is a base station where a first terminal device or the second terminal device resides. The parameter information includes information of sending the synchronizing signal.

Step 202 is to send, by the second terminal device, the synchronizing signal based on the parameter information, where the synchronizing signal is detected by the first terminal device and an intensity of the synchronizing signal is obtained by the first terminal device.

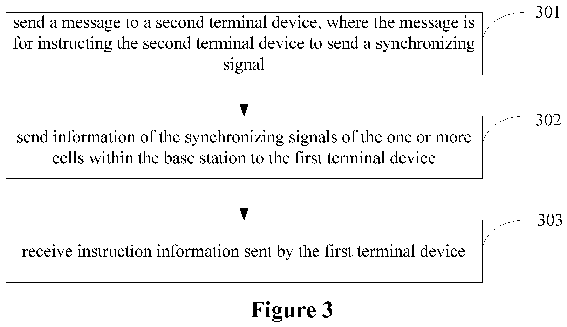

A terminal device discovery method provided according to an embodiment of the invention is shown in Figure 3. The method described from a base station side, and includes the steps from Step 301 to Step 303.

Step 301 is to send a message to a second terminal device, where the message is for instructing the second terminal device to send a synchronizing signal.

The synchronizing signal is one of synchronizing signals of one or more cells within the base station, and the base station is a base station where a first terminal device or the second terminal device resides.

The synchronizing signal may be at least one of a primary synchronizing signal and a secondary synchronizing signal.

Step 302 is to send information of the synchronizing signals of the one or more cells within the base station to the first terminal device.

Step 303 is to receive instruction information sent by the first terminal device.

The instruction information includes a determination result made by the first terminal device, which indicates whether a D2D network connection can be established between the first terminal device and the second terminal device, or includes information about the intensity of the synchronizing signal which is sent from the second terminal device to the first terminal device.

It may be noted that, the first and the second terminal devices may the same or not, and may be such cell phone, laptop, tablet PC, and the invention is not limited in this aspect.

According to the terminal device discovery method provided in the embodiments of the present invention, the first terminal device acquires the information of the synchronizing signals of one or more cells of within the base station where the first terminal device or the second terminal devices reside; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

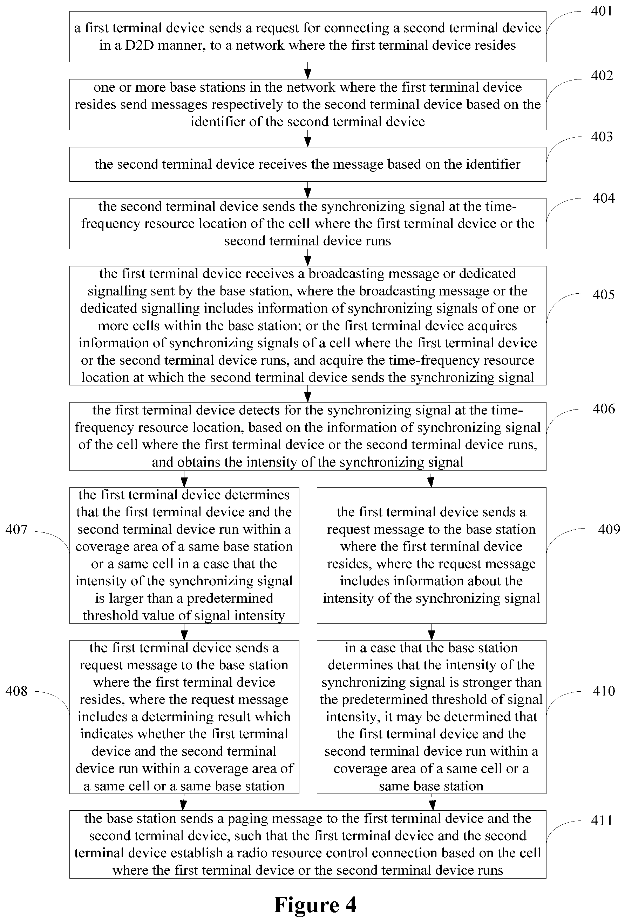

A terminal device discovery method is provided according to another embodiment of the invention is shown in Figure 4, the method includes the steps from Step 401 to Step 412.

In Step 401, a first terminal device sends a request for connecting a second terminal device in a D2D manner, to a network where the first terminal device resides.

The request may include an identifier of the second terminal device. For example, in a case that the second terminal device is a cell phone, the identifier may be a phone number of the second terminal device, and the invention is not limited in this aspect.

The network where the first terminal device resides may include one or more base stations.

In Step 402, one or more base stations in the network where the first terminal device resides send messages respectively to the second terminal device based on the identifier of the second terminal device.

The message may be a paging message, and the paging message is for instructing the second terminal device to send a synchronizing signal. The synchronizing signal is one of synchronizing signals of the one or more cells within the base station. The base station may be a base station where the first terminal device or the second terminal device resides.

The paging message includes parameter information of sending the synchronizing signal, where the parameter information includes information of sending the synchronizing signal and a location of time-frequency resource at which the synchronizing signal is sent.

In Step 403, the second terminal device receives the message based on the identifier.

Once the second terminal device receives the message sent by the base station, and acquires the identifier, the second terminal device may match its own identifier with the identifier acquired. In a case that the two identifiers are the same, it is indicated that the message sent by the base station is used for paging the second terminal device.

In Step 404, the second terminal device sends the synchronizing signal at the time-frequency resource of the cell where the first terminal device or the second terminal device runs.

The synchronizing signal may be at least one of a primary synchronizing signal and a secondary synchronizing signal.

In Step 405, the first terminal device receives a broadcasting message or dedicated signalling sent by the base station, where the broadcasting message or the dedicated signalling includes information of synchronizing signals of one or more cells within the base station; or the first terminal device acquires information of synchronizing signals of a cell where the first terminal device or the second terminal device runs, and acquire the location of the time-frequency resource at which the second terminal device sends the synchronizing signal.

The cell where the first terminal device or the second terminal device runs is one of the one or more cells mentioned above.

The first terminal device may acquire the location of the time-frequency resource at which the second terminal device sends the synchronizing signal based on the identifier of the second terminal device. And the following Step 412 may make a reference to the method of acquiring the location of the time-frequency resource at which the second terminal device sends the synchronizing signal based on the identifier of the second terminal device.

In addition, the first terminal device may also receive a first message sent by the base station, where the first message includes the location of the time-frequency resource at which the second terminal device sends the synchronizing signal, and the invention is not limited in this aspect.

In Step 406, the first terminal device detects for the synchronizing signal at the time-frequency resource, based on the information of synchronizing signal of the cell where the first terminal device or the second terminal device runs, and obtains the intensity of the synchronizing signal. Step 407 or Step 409 is performed.

The cell where the first terminal device or the second terminal device runs is one of the one or more cells mentioned above.

In Step 407, the first terminal device determines that the first terminal device and the second terminal device run within a coverage area of a same base station or a same cell in a case that the intensity of the synchronizing signal is larger than a predetermined threshold value of signal intensity.

Generally, the two devices which are to be connected in a D2D manner may be closed to each other (within a coverage area of a same base station), and the signal intensity may be strong. Therefore, it may be determined based on the predetermined threshold of signal intensity whether the two devices run within a coverage area of a same cell or base station and then determined whether the two devices may be connected in a D2D manner.

In Step 408, the first terminal device sends a request message to the base station where the first terminal device resides, where the request message includes a determining result which indicates whether the first terminal device and the second terminal device run within a coverage area of a same cell or a same base station. And then Step 411 may be performed.

In a case that the first terminal device detects the synchronizing signal sent by the second terminal device and learns that the intensity of the synchronizing signal is stronger than the predetermined threshold of signal intensity, it may be determined that the first terminal device and the second terminal device run within a coverage area of a same cell or a same base station.

In Step 409, the first terminal device sends a request message to the base station where the first terminal device resides, where the request message includes information about the intensity of the synchronizing signal.

The information about the intensity of the synchronizing signal is for the base station to learn the intensity of the synchronizing signal.

In Step 410, in a case that the base station determines that the intensity of the synchronizing signal is stronger than the predetermined threshold of signal intensity, it may be determined that the first terminal device and the second terminal device run within a coverage area of a same cell or a same base station. Then Step 411 may be performed.

In Step 411, the base station sends a paging message to the first terminal device and the second terminal device, such that the first terminal device and the second terminal device establish a radio resource control connection based on the cell where the first terminal device or the second terminal device runs.

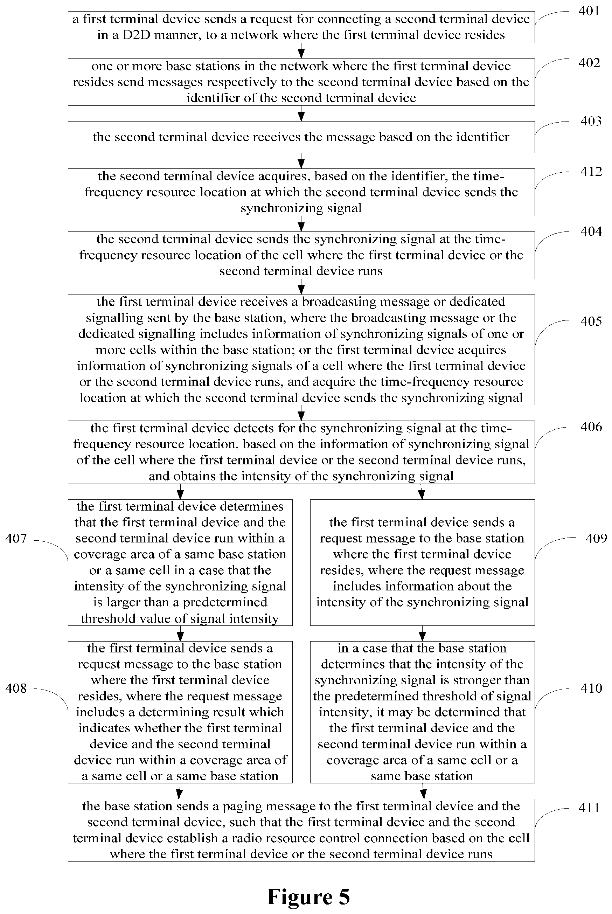

In addition, as shown in Figure 5, the paging message in Step 402 may not include a location of time-frequency resource at which the second terminal device sends the synchronizing signal, i.e., the parameter information includes the information of sending the synchronizing signal, such as a command for instructing the second terminal device to send the synchronizing signal at the cell where the first terminal device or the second terminal device runs. The method may include Step 412 between Step 403 and Step 404.

In Step 412, the second terminal device acquires, based on the identifier, the location of the time-frequency resource at which the second terminal device sends the synchronizing signal.

For example, the location of the time-frequency resource at which the synchronizing signal is sent is obtained by performing mod N operation on the identifier, where N may be the number of the time-frequency resource for sending the synchronizing signal. The information of the location of the time-frequency resource at which the synchronizing signal may be sent in the network is broadcasted by base station or is preset.

For example, the identifier of the second terminal device is 123456789, the number of the time-frequency resource at which the synchronizing signal may be sent is 100, it may obtain 89 after performing mod 100 on 123456789, and then the serial number of the time-frequency resource for sending the synchronizing signal by the second terminal device is 89.

Besides the above method, the location of the time-frequency resource at which the second terminal device sends the synchronizing signal may be determined in other methods, and the invention is not limited in this aspect.

According to the terminal device discovery method provided in another embodiment of the present invention, the first terminal device acquires the information of the synchronizing signals of one or more cells of within base stations where the first terminal device or the second terminal device resides; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

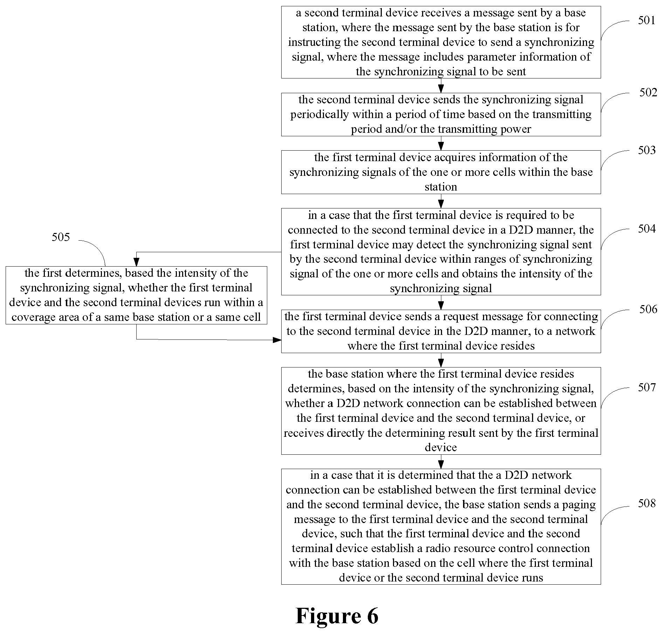

Figure 6 shows a terminal device discovery method provided according to yet another embodiment of the invention, the method includes the steps from Step 501 to Step 515.

In Step 501, a second terminal device receives a message sent by a base station, where the message sent by the base station is for instructing the second terminal device to send a synchronizing signal, where the message includes parameter information of sending the synchronizing signal.

The synchronizing signal is one of synchronizing signal of one or more cells within the base station, and the base station is a base station where a first terminal device or the second terminal device resides. The parameter information includes information of sending the synchronizing signal.

The parameter information includes a transmitting period and/or a transmitting power of sending the synchronizing signal configured by the base station for the second terminal device. The second terminal device may send the synchronizing signal via the cell where the first terminal device or the second terminal device runs.

In Step 502, the second terminal device sends the synchronizing signal periodically within a period of time based on the transmitting period and/or the transmitting power.

The synchronizing signal may be at least one of a primary synchronizing signal and a secondary synchronizing signal.

The second terminal device may send the synchronizing signal periodically within a period of time, for example, the synchronizing signal may be sent every minute or every 10 minutes and the invention is not limited in this aspect.

In Step 503, the first terminal device acquires information of the synchronizing signals of the one or more cells within the base station.

The base station is a base station where the first terminal device or the second terminal device resides.

By acquiring synchronizing signal information of the base stations where the first terminal device and the second terminal device reside respectively, the first terminal device may learn the synchronizing signal information of the cells which may be sent by the second terminal device potentially, in a way that the synchronizing signal may be detected.

In Step 504, in a case that the first terminal device is required to be connected to the second terminal device in a D2D manner, the first terminal device may detect the synchronizing signal sent by the second terminal device within ranges of synchronizing signal of the one or more cells and obtains the intensity of the synchronizing signal. And then Step 505 may be performed or Step 506 may be performed directly.

In Step 505, the first determines, based the intensity of the synchronizing signal, whether the first terminal device and the second terminal devices run within a coverage area of a same base station or a same cell. And then Step 506 may be performed.

Step 407 shown in Figure 4 may make a reference for the determination, and detailed description thereof is omitted herein.

In Step 506, the first terminal device sends a request message for connecting to the second terminal device in the D2D manner, to a network where the first terminal device resides.

The request message includes a determining result made by the first terminal device, which indicates whether a D2D network connection can be established between the first terminal device and the second terminal device, or includes the intensity of the synchronizing signal.

In Step 507, the base station where the first terminal device resides determines, based on the intensity of the synchronizing signal, whether a D2D network connection can be established between the first terminal device and the second terminal device, or receives directly the determining result sent by the first terminal device.

In Step 508, in a case that it is determined that the a D2D network connection can be established between the first terminal device and the second terminal device, the base station sends a paging message to the first terminal device and the second terminal device, such that the first terminal device and the second terminal device establish a radio resource control connection with the base station based on the cell where the first terminal device or the second terminal device runs.

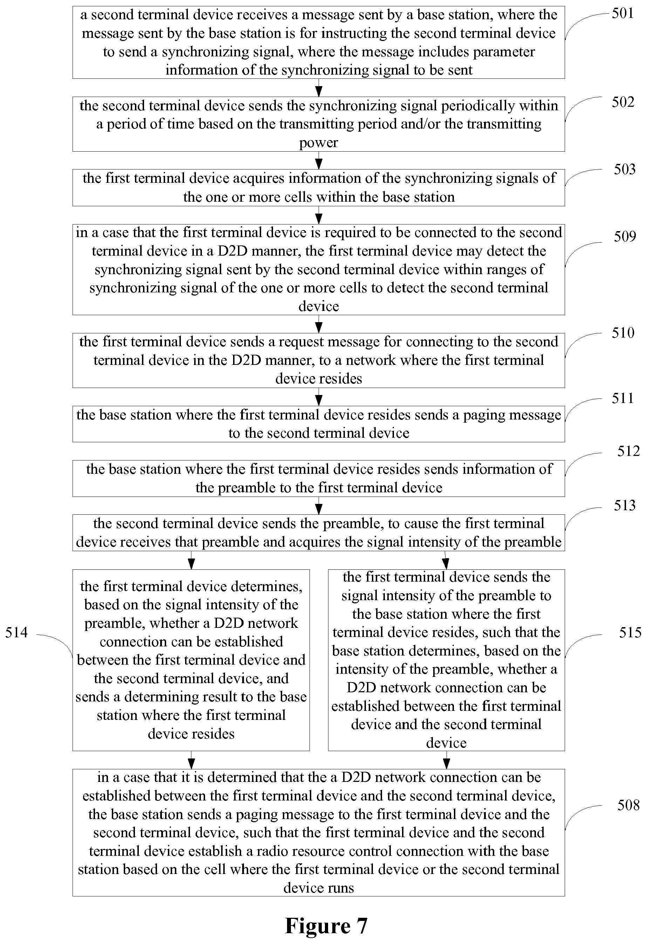

In addition, for determining more accurately whether a D2D network connection can be established between the first terminal device and the second terminal device, a terminal device discovery method is provided according to another embodiment of the invention, as shown in Figure 7. The Step 504 to Step 507 above may be realized by the following steps from Step 509 to Step 515 as follows.

In Step 509, in a case that the first terminal device is required to be connected to the second terminal device in a D2D manner, the first terminal device may detect the synchronizing signal sent by the second terminal device within ranges of synchronizing signal of the one or more cells to detect the second terminal device.

In Step 510, the first terminal device sends a request message for connecting to the second terminal device in the D2D manner, to a network where the first terminal device resides.

The request message indicates that the second terminal device is detected.

In Step 511, the base station where the first terminal device resides sends a paging message to the second terminal device.

The paging message includes a preamble allocated to the second terminal device by the base station.

Specifically, because the second terminal device is already detected by the first terminal device, the base station only allocates one preamble rather than multiple preambles to the second terminal device.

In Step 512, the base station where the first terminal device resides sends information of the preamble to the first terminal device.

Specifically, to facilitate the first terminal device in detecting the preamble sent by the second terminal device, the first terminal device needs to learn the information of the preamble, such as a serial number of the preamble.

In Step 513, the second terminal device sends the preamble, to cause the first terminal device receives that preamble and acquires the signal intensity of the preamble. And then Step 514 or 515 may be performed.

In Step 514, the first terminal device determines, based on the signal intensity of the preamble, whether a D2D network connection can be established between the first terminal device and the second terminal device, and sends a determining result to the base station where the first terminal device resides. And then Step 508 may be performed.

In Step 515, the first terminal device sends the signal intensity of the preamble to the base station where the first terminal device resides, such that the base station determines, based on the intensity of the preamble, whether a D2D network connection can be established between the first terminal device and the second terminal device. And then Step 508 may be performed.

According to the terminal device discovery method provided in another embodiment of the present invention, the first terminal device acquires the information of the synchronizing signals of one or more cells of within base stations where the first terminal device or the second terminal devices resides; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

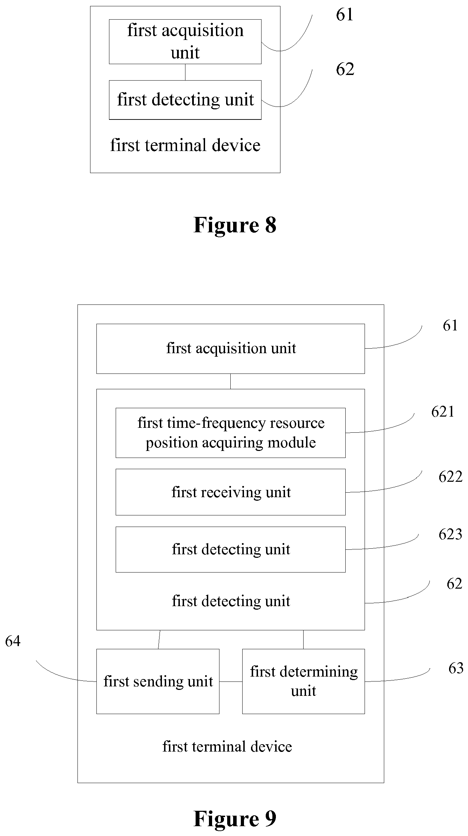

As shown in Figure 8, a first terminal device provided according to an embodiment of the invention, includes:
a first acquiring unit 61, configured to acquire information of synchronizing signals of one or more cells within a base station, where the base station is a base station where the first terminal device or a second terminal device resides;
a first detecting unit 62, configured to detect, by the first terminal device, a synchronizing signal sent by the second terminal device, based on the information of synchronizing signals of the one or more cells and obtain an intensity of the synchronizing signal, to discover the second terminal device via the synchronizing signal, where the synchronizing signal sent by the second terminal device is one of the synchronizing signals of the one or more cells.

Furthermore, as shown in Figure 9, the first terminal device further includes:
a first determining unit 63, configured to determine, based on the intensity of the synchronizing signal, whether a D2D network connection can be established between the first terminal device and the second terminal device; and
a first sending unit 64, configured to send a determining result made by the first determining unit 63 or information about the intensity of the synchronizing signal to the base station.

Furthermore, as shown in Figure 9, the first acquisition unit 61 is configured to:
receive a broadcasting message or dedicated signalling sent by the base station, where the broadcasting message or the dedicated signalling includes information of the synchronizing signals of the one or more cells within the base stations; or receive information of a synchronizing signal of a cell where the first terminal device or the second terminal device runs, where the cell where the first terminal device or the second terminal device runs is one of the one or more cells mentioned above.

Furthermore, as shown in Figure 9, the first determining unit 63 is configured to:
determine that a D2D network connection can be established between the first terminal device and the second terminal devices in a case that the intensity of the synchronizing signal is greater than a predetermined threshold of signal intensity.

Furthermore, as shown in Figure 9, the first detecting unit 62 includes:
a first time-frequency resource location acquiring module 621, configured to acquire, based on the identifier of the second terminal device, a location of time-frequency resource at which the second terminal device sends the synchronizing signal;
a first receiving module 622, configured to receive a first message sent by the base station, where the first message includes the location of the time-frequency resource at which the second terminal device sends the synchronizing signal;
a first detecting module 623, configured to detect for the synchronizing signal and acquires the intensity of the synchronizing signal at the time-frequency resource, based on the information of the synchronizing signals of the cell where the first terminal device or the second terminal device runs, where the cell where the first terminal device or the second terminal device runs is one of the one or more cells mentioned above.

Furthermore, as shown in Figure 9, the first determining unit 63 is configured to:
determine, based the acquired intensity of the synchronizing signal, whether the first terminal device and the second terminal device run in a coverage area of a same base station or a same cell.

Furthermore, as shown in Figure 9, the first sending unit 64 is configured to:
send an instruction information indicating whether the first terminal device and the second terminal device run within a coverage area of a same base station or a same cell to the base station as a determining result.

Furthermore, as shown in Figure 9, the first determining unit 63 is configured to:
determine that the first terminal device and the second terminal device run within a coverage area of a same base station or a same cell in a case that the synchronizing signal sent by the second terminal device is detected and the intensity of the synchronizing signal is larger than a predetermined threshold value of signal intensity.

Furthermore, as shown in Figure 9, the first sending unit 64 is configured to:
send a request message for connecting to the second terminal device in a D2D manner to the base station.

The request message includes a determining result or the intensity of the synchronizing signal.

According to the first terminal device provided in the embodiments of the present invention, the first terminal device acquires the information of the synchronizing signals of one or more cells of within base stations where the first terminal device or the second terminal device resides; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

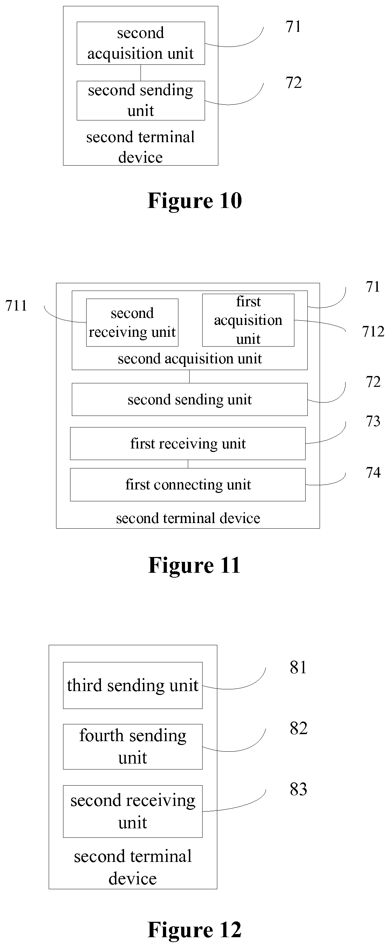

As shown in Figure 10, a second terminal device is provided according to an embodiment of the invention. The second terminal device includes:
a second acquiring unit 71, configured to acquire parameter information of sending a synchronizing signal, where the synchronizing signal is one of synchronizing signals of one or more cells within a base station, and the base station is a base station where a first terminal device or the second terminal device resides, where the parameter information includes information of sending the synchronizing signal; and
a second sending unit 72, configured to send the synchronizing signal based on the parameter information, where the synchronizing signal is detected by the first terminal device and the intensity of the synchronizing signal is obtained by the first terminal device.

Furthermore, as shown in Figure 11, the second acquiring unit 71 includes:
a second receiving module 711, configured to receive a message sent by the base station, where the message includes the parameter information of sending the synchronizing signal;
a first acquiring module 712, configured to acquire the parameter information of sending the synchronizing signal based on an identifier of the second terminal device.

Furthermore, as shown in Figure 11, the parameter information further includes information about a location of time-frequency resource, where the second sending unit 72 is configured to:
send the synchronizing signal at the time-frequency resource of the cell where the first terminal device or the second terminal device runs.

Furthermore, as shown in Figure 11, the parameter information further includes a transmitting period and/or a transmitting power of sending the synchronizing signal, and the second sending unit 72 is configured to:
send the synchronizing signal periodically within a period of time based on the transmitting period and/or the transmitting power.

Furthermore, the second terminal device shown in Figure 11 further includes:
a first receiving unit 73, configured to receive a paging message sent by the base station, where the paging message is for notifying the second terminal device that the first terminal device and the second terminal device have a permission of being connected in a D2D manner;
a first connecting unit 74, configured to establish a radio resource control connection with the base station based on the cell where the first terminal device or the second terminal device runs in a case that the paging message is received.

It may be noted that, the synchronizing signal may be at least one of a primary synchronizing signal and a secondary synchronizing signal.

According to the second terminal device provided in the embodiments of the present invention, the first terminal device acquires the information of the synchronizing signals of one or more cells of within base stations where the first terminal device or the second terminal device resides; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

As shown in Figure 12, a base station is provided according to an embodiment of the invention. the base station includes:
a third sending unit 81, configured to send a message to a second terminal device, where the message is for instructing the second terminal device to send a synchronizing signal, the synchronizing signal is one of synchronizing signals of one or more cells within the base station, and the base station is a base station where a first terminal device or the second terminal device resides;
a fourth sending unit 82, configured to send, to the first terminal device, information of the synchronizing signals of the one or more cells within the base station;
a second receiving unit 83, configured to receive instruction information sent by the first terminal device; the instruction information includes a determining result made by the first terminal device, which indicates whether a D2D network connection can be established between the first terminal device and the second terminal device, or includes information about the intensity of the synchronizing signal received by the first terminal device from the second terminal device.

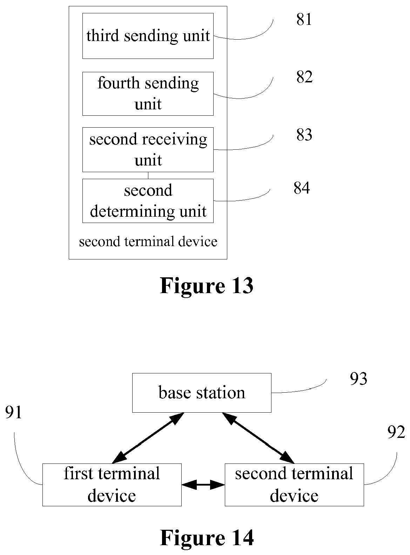

Furthermore, as shown in Figure 13, the instruction information is the information about the intensity of the synchronizing signal received by the first terminal device, the base station further includes:
a second determining unit 84, configured to determine, based on the intensity of the synchronizing signal, whether a D2D network connection can be established between the first terminal device and the second terminal device.

Furthermore, as shown in Figure 13, the fourth sending unit 82 is configured to:
send a broadcasting message or dedicated signalling to the first terminal device, where the broadcasting message or the dedicated signalling includes information of synchronizing signals of one or more cells within the base station.

Furthermore, as shown in Figure 13, the third sending unit 81 is configured to:
send a message to the second terminal device, where the message parameter information of the synchronizing signal, where the synchronizing signal is one of sending the synchronizing signals of the one or more cells within the base station, and the base station is a base station where the first terminal or the second terminal device resides.

Furthermore, as shown in Figure 13, the second determining unit 84 is configured to:
determine whether a D2D network connection can be established between the first terminal device and the second terminal device by determining whether the first terminal device and the second terminal device run with a coverage area of a same base station or a same cell.

According to the base station provided in the embodiments of the present invention, the first terminal device acquires the information of the synchronizing signals of one or more cells of within base stations where the first terminal device or the second terminal device resides; the first terminal device detects a synchronizing signal sent by the second terminal device, based on the information of synchronizing signals of one or more cells and obtains the intensity of the synchronizing signal, to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

As shown in Figure 14, a terminal device discovery system is provided according to an embodiment of the invention. The system includes a first terminal device 91, a second terminal device 92 and a base station 93.

The first terminal device 91 is configured to acquire information of synchronizing signals of one or more cells within the base station 93 where the first terminal device 91 or the second terminal device 92 resides, and detect a synchronizing signal sent by the second terminal device 92 based on the information of synchronizing signals of one or more cells, and acquire an intensity of the synchronizing signal to discover the second terminal device 92 through the synchronizing signal, where the synchronizing signal sent by the second terminal 92 is one of the synchronizing signals of the one or more cells.

The second terminal device 92 is configured to acquire parameter information of sending the synchronizing signal, where the synchronizing signal is one of the synchronizing signals of the one or more cells within the base station 93, where the base station 93 is a base station where the first terminal device 92 or the second terminal device 93 resides, where the parameter information includes the information of sending the synchronizing signal; send the synchronizing signal based on the parameter information, where the synchronizing signal is detected by the first terminal device 91, and the intensity of the synchronizing signal is obtained by the first terminal device.

The base station 93 is configured to send a message to the second terminal device 92 to instruct the second terminal device 92 to send the synchronizing signal, where the synchronizing signal is one of the synchronizing signals of the one or more cells within the base station 93, where the base station 93 is a base station where the first terminal device 92 or the second terminal device 93 resides; send the information of the synchronizing signals of the one or more cells within the base station 93 and receive instruction information sent by the first terminal device 91, where the instruction information includes a determining result made by the first terminal device 91 which indicates whether a D2D network connection can be established between the first terminal device 91 and the second terminal device 92, or includes the intensity of the synchronizing signal received by the first terminal device 91 from the second terminal device 92.

The embodiment of the first terminal device, the second terminal device and the base station may make a reference for the implementation, and detailed description thereof is omitted herein.

By the terminal device discovery system provided according to the embodiments of the invention, the first terminal device acquires the information of the synchronizing signals of one or more cells of within base stations where the first terminal device or the second terminal devices resides; the first terminal device detects a synchronizing signal sent by the second terminal device, based on the information of synchronizing signals of one or more cells and obtains an intensity of the synchronizing signal in a way to discover the second terminal device via the synchronizing signal. In the embodiments of the invention, the synchronizing signal sent by the second terminal device is adopted to discover the second terminal device, and then a waste of preamble is avoided, thereby saving the resource of preamble when the base station searches for the terminal device.

By the foregoing description of the embodiments, those skilled in the art may understand clearly that the present invention may be implemented via software and necessary hardware platform, or via the hardware only; in most cases, the former is preferable. In view of this, all or part of the embodiments of the invention may be implemented by software product, where the software product may be stored in readable storage medium, such as ROM/RAM, disk or optical disk, and multiple instructions are included in the software product to enable a computer device (personal computer, server or network device) to implement the method provided according to each embodiment or certain part of the embodiment of the invention.

## Claims

1. A terminal device discovery method, comprising:
acquiring (101), by a first terminal device, information about synchronizing signals of one or more cells within a base station, wherein the base station is a base station where the first terminal device or a second terminal device resides;
detecting (102), by the first terminal device, a synchronizing signal sent by the second terminal device, based on the information about the synchronizing signals of the one or more cells and obtain an intensity of the synchronizing signal, to discover the second terminal device via the synchronizing signal, wherein the second terminal device acquires parameter information about sending the synchronizing signal and sends the synchronizing signal based on the parameter information, wherein the parameter information comprises information about sending the synchronizing signal, and wherein the synchronizing signal sent by the second terminal device is one of the synchronizing signals of the one or more cells,
wherein after obtaining an intensity of the synchronizing signal, the method further comprises:
determining, by the first terminal device, based on the intensity of the synchronizing signal, whether a D2D network connection can be established between the first terminal device and the second terminal device and sending a determining result to the base station; and
sending, by the first terminal device, information about the intensity of the synchronizing signal to the base station,
wherein detecting, by the first terminal device, a synchronizing signal sent by the second terminal device, based on the information about the synchronizing signals of the one or more cells and obtain an intensity of the synchronizing signal comprises:
acquiring, by the first terminal device, based on an identifier of the second terminal device, the location of the time-frequency resource at which the synchronizing signal sent by the second terminal device; and
detecting, by the first terminal device, the synchronizing signal and obtaining the intensity of the synchronizing signal at the time-frequency resource, based on the information about the synchronizing signals of the cell where the first terminal device or the second terminal device runs, wherein the cell where the first terminal device or the second terminal device runs is one of the one or more cells, and
wherein determining, by the first terminal device, based on the intensity of the synchronizing signal, whether a D2D network connection can be established between the first terminal device and the second terminal device and sending a determining result to the base station comprises:
determining, by the first terminal device, based the obtained intensity of the synchronizing signal, whether the first terminal device and the second terminal device run in a coverage area of a same base station or a same cell; sending in instruction information indicating whether the first terminal device and the second terminal devices run in a coverage area of a same base station or a same cell to the base station as the determining result.

2. A terminal device discovery method, comprising:
acquiring (201), by a second terminal device, parameter information about sending a synchronizing signal, wherein the synchronizing signal is one of synchronizing signals of one or more cells within a base station, and the base station is a base station where a first terminal device or the second terminal device resides, wherein the parameter information comprises information about sending the synchronizing signal;
sending (202), by the second terminal device, the synchronizing signal based on the parameter information, so that the first terminal device detects the synchronizing signal and obtains the intensity of the synchronizing signal at a time-frequency resource, which is acquired by the first terminal device based on an identifier of the second terminal device, based on the information about the synchronizing signals of the cell where the first terminal device or the second terminal device runs, determines, based the obtained intensity of the synchronizing signal, whether the first terminal device and the second terminal device run in a coverage area of a same base station or a same cell, and sends instruction information indicating whether the first terminal device and the second terminal devices run in a coverage area of a same base station or a same cell to the base station as a determining result and sends information about the intensity of the synchronizing signal to the base station.

3. The method according to claim 2, wherein the parameter information further comprises a transmitting period and/or a transmitting power of sending the synchronizing signal; sending, by the second terminal device, the synchronizing signal based on the parameter information comprises:
sending the synchronizing signal periodically within a period of time based on the transmitting period and/or the transmitting power.

4. The method according to claim 2, wherein after sending, by the second terminal device, the synchronizing signal based on the parameter information, the method further comprises:
receiving, by the second terminal device, a paging message sent by the base station, wherein the paging message is for notifying the second terminal device that the first terminal device and the second terminal device have a permission of being connected in a D2D manner;
establishing, by the second terminal device, a radio resource control connection with the base station based on the cell where the first terminal device or the second terminal device in a case that the paging message is received.

5. A first terminal device (91), comprising:
a first acquiring unit (61), configured to acquire, information about synchronizing signals of one or more cells within a base station (93), wherein the base station (93) is a base station where the first terminal device (91) or a second terminal device (92) resides;
a first detecting unit (62), configured to detect a synchronizing signal sent by the second terminal device (92), based on the information about the synchronizing signals of the one or more cells and obtain an intensity of the synchronizing signal, to discover the second terminal device (92) via the synchronizing signal, wherein the second terminal device acquires parameter information about sending the synchronizing signal and sends the synchronizing signal based on the parameter information, wherein the parameter information comprises information about sending the synchronizing signal, and wherein the synchronizing signal sent by the second terminal device (92) is one of the synchronizing signals of the one or more cells;
a first determining unit (63), configured to determine whether a D2D network connection can be established between the first terminal device (91) and the second terminal device (92), based on the intensity of the synchronizing signal; and
a first sending unit (64), configured to send a determining result to the base station (93), and send the intensity of the synchronizing signal to the base station (93),
wherein the first detecting unit (62) comprises:
a first time-frequency resource location acquiring module (621), configured to acquire a location of time-frequency resource at which the second terminal device (92) sends the synchronizing signal, based on the identifier of the second terminal device (92); and
a first detecting module (623), configured to detect the synchronizing signal and acquire an intensity of the synchronizing signal at the time-frequency resource, based on the information about the synchronizing signals of the cell where the first terminal device (91) or the second terminal device (92) runs, wherein the cell where the first terminal device (91) or the second terminal device (92) runs is one of the one or more cells, and
wherein the first determining unit (63) is configured to:
determine whether the first terminal device (91) and the second terminal device (92) run within a coverage area of a same base station or a same cell, based the obtained intensity of the synchronizing signal;
the first sending unit (64) is configured to send the instruction information indicating whether the first terminal device (91) and the second terminal devices (92) run within a coverage area of a same base station or a same cell to the base station as a determining result.

6. A second terminal device (92), comprising:
a second acquiring unit (71), configured to acquire parameter information about sending a synchronizing signal, wherein the synchronizing signal is one of synchronizing signals of one or more cells within a base station (93), and the base station is a base station where a first terminal device (91) or the second terminal device (92) resides, wherein the parameter information comprises information about sending the synchronizing signal;
a second sending unit (72), configured to send the synchronizing signal based on the parameter information, so that the first terminal device detects the synchronizing signal and obtains the intensity of the synchronizing signal at a time-frequency resource, which is acquired by the first terminal device based on an identifier of the second terminal device, based on the information about the synchronizing signals of the cell where the first terminal device or the second terminal device runs, determines, based the obtained intensity of the synchronizing signal, whether the first terminal device and the second terminal device run in a coverage area of a same base station or a same cell, and sends instruction information indicating whether the first terminal device and the second terminal devices run in a coverage area of a same base station or a same cell to the base station as a determining result and sends the intensity of the synchronizing signal to the base station.

7. The second terminal device (92) according to claim 6, wherein the parameter information further comprises a transmitting period and/or a transmitting power of sending the synchronizing signal; wherein the second sending unit (72) is configured to:
send the synchronizing signal periodically within a period of time based on the transmitting period and/or the transmitting power.

8. The second terminal device (92) according to claim 6, wherein the second terminal device (92) further comprises:
a first receiving unit (73), configured to receive a paging message sent by the base station (93), wherein the paging message is for notifying the second terminal device (92) that the first terminal device (91) and the second terminal device (92) have a permission of being connected in a D2D manner;
a first connecting unit (74), configured to establish a radio resource control connection with the base station (93) based on the cell where the first terminal device (91) or the second terminal device (92) runs in a case that the paging message is received.

## Patentansprüche

1. Endgerätvorrichtungs-Auffindungsverfahren, das Folgendes umfasst:
Erfassen (101) durch eine erste Endgerätvorrichtung von Informationen über Synchronisationssignale einer oder mehrerer Zellen innerhalb einer Basisstation, wobei die Basisstation eine Basisstation ist, wo sich die erste Endgerätvorrichtung oder eine zweite Endgerätvorrichtung befindet;
Detektieren (102) durch die erste Endgerätvorrichtung eines durch die zweite Endgerätvorrichtung gesendeten Synchronisationssignals anhand der Informationen über die Synchronisationssignale der einen oder mehreren Zellen und Erhalten einer Stärke des Synchronisationssignals, um die zweite Endgerätvorrichtung über das Synchronisationssignal zu detektieren, wobei die zweite Endgerätvorrichtung Parameterinformationen über das Senden des Synchronisationssignals erfasst und das Synchronisationssignal anhand der Parameterinformationen sendet, wobei die Parameterinformationen Informationen über das Senden des Synchronisationssignals umfassen und wobei das durch die zweite Endgerätvorrichtung gesendete Synchronisationssignal eines der Synchronisationssignale der einen oder der mehreren Zellen ist,
wobei nach dem Erhalten einer Stärke des Synchronisationssignals das Verfahren ferner Folgendes umfasst:
Bestimmen durch die erste Endgerätvorrichtung anhand der Stärke des Synchronisationssignals, ob eine D2D-Netzverbindung zwischen der ersten Endgerätvorrichtung und der zweiten Endgerätvorrichtung eingerichtet werden kann, und Senden eines Bestimmungsergebnisses an die Basisstation; und
Senden durch die erste Endgerätvorrichtung von Informationen über die Stärke des Synchronisationssignals an die Basisstation,
wobei das Detektieren durch die erste Endgerätvorrichtung eines durch die zweite Endgerätvorrichtung gesendeten Synchronisationssignals anhand der Informationen über die Synchronisationssignale der einen oder der mehreren Zellen und das Erhalten einer Stärke des Synchronisationssignals Folgendes umfasst:
Erfassen durch die erste Endgerätvorrichtung anhand einer Kennung der zweiten Endgerätvorrichtung des Orts des Zeit-Frequenz-Betriebsmittels, an dem das Synchronisationssignal durch die zweite Endgerätvorrichtung gesendet; und
Detektieren durch die erste Endgerätvorrichtung des Synchronisationssignals und Erhalten der Stärke des Synchronisationssignals an dem Zeit-Frequenzbetriebsmittel anhand der Informationen über die Synchronisationssignale der Zelle, wo die erste Endgerätvorrichtung oder die zweite Endgerätvorrichtung läuft, wobei die Zelle, wo die erste Endgerätvorrichtung oder die zweite Endgerätvorrichtung läuft, eine der einen oder mehreren Zellen ist und
wobei das Bestimmen durch die erste Endgerätvorrichtung anhand der Stärke des Synchronisationssignals, ob eine D2D-Netzverbindung zwischen der ersten Endgerätvorrichtung und der zweiten Endgerätvorrichtung eingerichtet werden kann, und das Senden eines Bestimmungsergebnisses an die Basisstation Folgendes umfasst:
Bestimmen durch die erste Endgerätvorrichtung anhand der erhaltenen Stärke des Synchronisationssignals, ob die erste Endgerätvorrichtung und die zweite Endgerätvorrichtung in einem Abdeckungsbereich derselben Basisstation oder derselben Zelle laufen; Senden von Anweisungsinformationen, die angeben, ob die erste Endgerätvorrichtung und die zweite Endgerätvorrichtung in einem Abdeckungsbereich derselben Basisstation oder derselben Zelle laufen, an die Basisstation als das Bestimmungsergebnis.

2. Endgerätvorrichtungs-Auffindungsverfahren, das Folgendes umfasst:
Erfassen (201) durch eine zweite Endgerätvorrichtung von Parameterinformationen über das Senden eines Synchronisationssignals, wobei das Synchronisationssignal eines von Synchronisationssignalen einer oder mehrerer Zellen innerhalb einer Basisstation ist und die Basisstation einen Basisstation ist, wo sich eine erste Endgerätvorrichtung oder die zweite Endgerätvorrichtung befindet, wobei die Parameterinformationen Informationen über das Senden des Synchronisationssignal umfassen;
Senden (202) durch die zweite Endgerätvorrichtung des Synchronisationssignal anhand der Parameterinformationen, so dass die erste Endgerätvorrichtung das Synchronisationssignal detektiert und die Stärke des Synchronisationssignals an einem Zeit-Frequenz-Betriebsmittel erhält, das durch die erste Endgerätvorrichtung anhand einer Kennung der zweiten Endgerätvorrichtung erfasst wird, anhand der Informationen über die Synchronisationssignale der Zelle, wo die erste Endgerätvorrichtung oder die zweite Endgerätvorrichtung läuft, anhand der erhaltenen Stärke des Synchronisationssignals bestimmt, ob die erste Endgerätvorrichtung und die zweite Endgerätvorrichtung in einem Abdeckungsbereich derselben Basisstation oder derselben Zelle laufen, und Anweisungsinformationen sendet, die angeben, ob die erste Endgerätvorrichtung und die zweite Endgerätvorrichtung in einem Abdeckungsbereich derselben Basisstation oder derselben Zelle laufen, als ein Bestimmungsergebnis sendet und Informationen über die Stärke des Synchronisationssignals an die Basisstation sendet.

3. Verfahren nach Anspruch 2, wobei die Parameterinformationen ferner eine Sendeperiode und/oder eine Sendeleistung des Sendens des Synchronisationssignals umfassen; wobei das Senden durch die zweite Endgerätvorrichtung des Synchronisationssignals anhand der Parameterinformationen Folgendes umfasst:
Senden des Synchronisationssignals periodisch innerhalb einer Zeitperiode anhand der Sendeperiode und/oder der Sendeleistung.

4. Verfahren nach Anspruch 2, wobei nach dem Senden durch die zweite Endgerätvorrichtung des Synchronisationssignals anhand der Parameterinformationen das Verfahren ferner Folgendes umfasst:
Empfangen durch die zweite Endgerätvorrichtung einer durch die Basisstation gesendeten Paging-Nachricht, wobei die Paging-Nachricht dazu dient, die zweite Endgerätvorrichtung zu benachrichtigen, dass die erste Endgerätvorrichtung und die zweite Endgerätvorrichtung eine Genehmigung besitzen, in einer D2D-Weise verbunden zu werden;
Einrichten durch die zweite Endgerätvorrichtung einer Funkbetriebsmittelsteuerverbindung mit der Basisstation anhand der Zelle, wo die erste Endgerätvorrichtung oder die zweite Endgerätvorrichtung in dem Fall, in dem die Paging-Nachricht empfangen wird.

5. Erste Endgerätvorrichtung (91), die Folgendes umfasst:
eine erste Erfassungseinheit (61), die konfiguriert ist, Informationen über Synchronisationssignale einer oder mehrerer Zellen innerhalb einer Basisstation (93) zu erfassen, wobei die Basisstation (93) eine Basisstation ist, wo sich die erste Endgerätvorrichtung (91) oder eine zweite Endgerätvorrichtung (92) befindet;
eine erste Detektionseinheit (62), die konfiguriert ist, ein durch die zweite Endgerätvorrichtung (92) gesendetes Synchronisationssignal anhand der Informationen über das Synchronisationssignal der einen oder der mehreren Zellen zu detektieren und eine Stärke des Synchronisationssignals zu erhalten, um die zweite Endgerätvorrichtung (92) über das Synchronisationssignal aufzufinden, wobei die zweite Endgerätvorrichtung Parameterinformationen über das Senden des Synchronisationssignals erfasst und das Synchronisationssignal anhand der Parameterinformationen sendet, wobei die Parameterinformationen Informationen über das Senden des Synchronisationssignals umfassen und wobei das durch die zweite Endgerätvorrichtung (92) gesendete Synchronisationssignal eines der Synchronisationssignale der einen oder der mehreren Zellen ist;
eine erste Bestimmungseinheit (63), die konfiguriert ist, anhand der Stärke des Synchronisationssignals zu bestimmen, ob eine D2D-Netzverbindung zwischen der ersten Endgerätvorrichtung (91) und der zweiten Endgerätvorrichtung (92) eingerichtet werden kann; und
eine erste Sendeeinheit (64), die konfiguriert ist, ein Bestimmungsergebnis an die Basisstation (93) zu senden und die Stärke des Synchronisationssignals an die Basisstation (93) zu senden,
wobei die erste Detektionseinheit (62) Folgendes umfasst:
ein erstes Zeit-Frequenz-Betriebsmittelortserfassungsmodul (621), das konfiguriert ist, einen Ort eines Zeit-Frequenz-Betriebsmittels, an dem die zweite Endgerätvorrichtung (92) das Synchronisationssignals sendet, anhand der Kennung der zweiten Endgerätvorrichtung (92) zu erfassen; und
ein erstes Detektionsmodul (623), das konfiguriert ist, das Synchronisationssignal zu detektieren und eine Stärke des Synchronisationssignals an dem Zeit-Frequenz-Betriebsmittel anhand der Informationen über die Synchronisationssignale der Zelle, wo die erste Endgerätvorrichtung (91) oder die zweite Endgerätvorrichtung (92) läuft, zu erfassen, wobei die Zelle, wo die erste Endgerätvorrichtung (91) oder die zweite Endgerätvorrichtung (92) läuft, eine der einen oder der mehreren Zellen ist, und
wobei die erste Bestimmungseinheit (63) konfiguriert ist:
anhand der erhaltenen Stärke des Synchronisationssignals zu bestimmen, ob die erste Endgerätvorrichtung (91) und die zweite Endgerätvorrichtung (92) innerhalb eines Abdeckungsbereichs derselben Basisstation oder derselben Zelle laufen;
die erste Sendeeinheit (64) konfiguriert ist, die Anweisungsinformationen, die angeben, ob die erste Endgerätvorrichtung (91) und die zweite Endgerätvorrichtung (92) innerhalb eines Abdeckungsbereichs derselben Basisstation oder derselben Zelle laufen, als ein Bestimmungsergebnis an die Basisstation zu senden.

6. Zweite Endgerätvorrichtung (92), die Folgendes umfasst:
eine zweite Erfassungseinheit (71), die konfiguriert ist, Parameterinformationen über das Senden eines Synchronisationssignals zu erfassen, wobei das Synchronisationssignal eines von Synchronisationssignalen einer oder mehrerer Zellen innerhalb einer Basisstation (93) ist und wobei die Basisstation eine Basisstation ist, wo sich eine erste Endgerätvorrichtung (91) oder die zweite Endgerätvorrichtung (92) befinden, wobei die Parameterinformationen Informationen über das Senden des Synchronisationssignal umfassen;
eine zweite Sendeeinheit (72), die konfiguriert ist, das Synchronisationssignal anhand der Parameterinformationen zu senden, so dass die erste Endgerätvorrichtung das Synchronisationssignal detektiert und die Stärke des Synchronisationssignal an einem Zeit-Frequenz-Betriebsmittel erhält, das durch die erste Endgerätvorrichtung anhand einer Kennung der zweiten Endgerätvorrichtung erfasst wird, anhand der Informationen über die Synchronisationssignale der Zelle, wo die erste Endgerätvorrichtung oder zweite Endgerätvorrichtung läuft, anhand der erhaltenen Stärke des Synchronisationssignals bestimmt, ob die erste Endgerätvorrichtung und die zweite Endgerätvorrichtung in einem Abdeckungsbereich derselben Basisstation oder derselben Zelle laufen, und Anweisungsinformationen, die angeben, ob die erste Endgerätvorrichtung und die zweite Endgerätvorrichtung in einem Abdeckungsbereich derselben Basisstation oder derselben Zelle laufen, als ein Bestimmungsergebnis an die Basisstation sendet und die Stärke des Synchronisationssignals an die Basisstation sendet.

7. Zweite Endgerätvorrichtung (92) nach Anspruch 6, wobei die Parameterinformationen ferner eine Sendeperiode und/oder eine Sendeleistung des Sendens des Synchronisationssignals umfassen; wobei die zweite Sendeeinheit (72) konfiguriert ist:
das Synchronisationssignal periodisch innerhalb einer Zeitperiode anhand der Sendeperiode und/oder der Sendeleistung zu senden.

8. Zweite Endgerätvorrichtung (92) nach Anspruch 6, wobei die zweite Endgerätvorrichtung (92) ferner Folgendes umfasst:
eine erste Empfangseinheit (73), die konfiguriert ist, eine durch die Basisstation (93) gesendete Paging-Nachricht zu empfangen, wobei die Paging-Nachricht dazu dient,
die zweite Endgerätvorrichtung (92) zu benachrichtigen, dass die erste Endgerätvorrichtung (91) und die zweite Endgerätvorrichtung (92) eine Genehmigung besitzen, in einer D2D-Weise verbunden zu werden;
eine erste Verbindungseinheit (74), die konfiguriert ist, eine Funkbetriebsmittelsteuerverbindung mit der Basisstation (93) anhand der Zelle, wo die erste Endgerätvorrichtung (91) oder die zweite Endgerätvorrichtung (92) läuft, in einem Fall, in dem die Paging-Nachricht empfangen wird, einzurichten.

## Revendications

1. Procédé de découverte de dispositif terminal, comprenant les étapes suivantes :
acquisition (101), par un premier dispositif terminal, d'informations concernant des signaux de synchronisation d'une ou de plusieurs cellules au sein d'une station de base, la station de base étant une station de base où le premier dispositif terminal ou
un deuxième dispositif terminal réside ;
détection (102), par le premier dispositif terminal, d'un signal de synchronisation envoyé par le deuxième dispositif terminal, sur la base des informations concernant les signaux de synchronisation de la ou des cellules, et obtention d'une intensité du signal de synchronisation dans le but de découvrir le deuxième dispositif terminal par le biais du signal de synchronisation, le deuxième dispositif terminal acquérant des informations paramétriques concernant l'envoi du signal de synchronisation et envoyant le signal de synchronisation sur la base des informations paramétriques, les informations paramétriques comprenant des informations concernant l'envoi du signal de synchronisation, et le signal de synchronisation envoyé par le deuxième dispositif terminal étant l'un des signaux de synchronisation de la ou des cellules,
le procédé comprenant en outre, suite à l'étape d'obtention d'une intensité du signal de synchronisation, les étapes suivantes :
détermination, par le premier dispositif terminal, sur la base de l'intensité du signal de synchronisation, si une connexion réseau D2D peut être établie ou pas entre le premier dispositif terminal et le deuxième dispositif terminal, et envoi, à la station de base,
d'un résultat de détermination ; et
envoi, par le premier dispositif terminal, à la station de base, d'informations concernant l'intensité du signal de synchronisation,
l'étape de détection, par le premier dispositif terminal, d'un signal de synchronisation envoyé par le deuxième dispositif terminal, sur la base des informations concernant les signaux de synchronisation de la ou des cellules et d'obtention d'une intensité du signal de synchronisation comprenant les étapes suivantes :
acquisition, par le premier dispositif terminal, sur la base d'un identifiant du deuxième dispositif terminal, de l'emplacement de la ressource temps-fréquence auquel le signal de synchronisation envoyé par le deuxième dispositif terminal ; et
détection, par le premier dispositif terminal, du signal de synchronisation et obtention de l'intensité du signal de synchronisation à la ressource temps-fréquence, sur la base des informations concernant les signaux de synchronisation de la cellule où le premier dispositif terminal ou le deuxième dispositif terminal fonctionne, la cellule où le premier dispositif terminal ou le deuxième dispositif terminal fonctionne étant l'une de la ou des cellules, et
l'étape de détermination, par le premier dispositif terminal, sur la base de l'intensité du signal de synchronisation, si une connexion réseau D2D peut être établie ou pas entre le premier dispositif terminal et le deuxième dispositif terminal et d'envoi, à la station de base, d'un résultat de détermination comprenant l'étape suivante :
détermination, par le premier dispositif terminal, sur la base de l'intensité obtenue du signal de synchronisation, si le premier dispositif terminal et le deuxième dispositif terminal fonctionnent ou pas dans une zone de couverture d'une même station de base ou d'une même cellule ; envoi, à la station de base, en tant que résultat de détermination, d'informations d'instruction indiquant si le premier dispositif terminal et le deuxième dispositif terminal fonctionnent ou pas dans une zone de couverture d'une même station de base ou d'une même cellule.

2. Procédé de découverte de dispositif terminal, comprenant les étapes suivantes :
acquisition (201), par un deuxième dispositif terminal, d'informations paramétriques concernant l'envoi d'un signal de synchronisation, le signal de synchronisation étant l'un de signaux de synchronisation d'une ou de plusieurs cellules au sein d'une station de base, et la station de base étant une station de base où un premier dispositif terminal ou le deuxième dispositif terminal réside, les informations paramétriques comprenant des informations concernant l'envoi du signal de synchronisation ;
envoi (202), par le deuxième dispositif terminal, du signal de synchronisation sur la base des informations paramétriques, de sorte que le premier dispositif terminal détecte le signal de synchronisation et obtienne l'intensité du signal de synchronisation à une ressource temps-fréquence, qui est acquise par le premier dispositif terminal sur la base d'un identifiant du deuxième dispositif terminal, sur la base des informations concernant les signaux de synchronisation de la cellule où le premier dispositif terminal ou le deuxième dispositif terminal fonctionne, détermine, sur la base de l'intensité obtenue du signal de synchronisation, si le premier dispositif terminal et le deuxième dispositif terminal fonctionnent ou pas dans une zone de couverture d'une même station de base ou d'une même cellule, et envoie, à la station de base, en tant que résultat de détermination, des informations d'instruction indiquant si le premier dispositif terminal et le deuxième dispositif terminal fonctionnent ou pas dans une zone de couverture d'une même station de base ou d'une même cellule, et envoie, à la station de base, des informations concernant l'intensité du signal de synchronisation.

3. Procédé selon la revendication 2, dans lequel les informations paramétriques comprennent en outre une période d'émission et/ou une puissance d'émission pour l'envoi du signal de synchronisation ; l'étape d'envoi, par le deuxième dispositif terminal, du signal de synchronisation sur la base des informations paramétriques comprenant l'étape suivante :
envoi périodique du signal de synchronisation au sein d'une période de temps sur la base de la période d'émission et/ou de la puissance d'émission.

4. Procédé selon la revendication 2, lequel procédé comprend en outre, suite à l'étape d'envoi, par le deuxième dispositif terminal, du signal de synchronisation sur la base des informations paramétriques, les étapes suivantes :
réception, par le deuxième dispositif terminal, d'un message de radiomessagerie unilatérale envoyé par la station de base, le message de radiomessagerie unilatérale servant à notifier au deuxième dispositif terminal que le premier dispositif terminal et le deuxième dispositif terminal sont autorisés à se connecter selon un mode D2D ;
établissement, par le deuxième dispositif terminal, d'une connexion de commande de ressources radio avec la station de base sur la base de la cellule où le premier dispositif terminal ou le deuxième dispositif terminal en cas de réception du message de radiomessagerie unilatérale.

5. Premier dispositif terminal (91), comprenant :
une première unité d'acquisition (61), configurée pour acquérir des informations concernant des signaux de synchronisation d'une ou de plusieurs cellules au sein d'une station de base (93), la station de base (93) étant une station de base où le premier dispositif terminal (91) ou un deuxième dispositif terminal (92) réside ;
une première unité de détection (62), configurée pour détecter un signal de synchronisation envoyé par le deuxième dispositif terminal (92), sur la base des informations concernant les signaux de synchronisation de la ou des cellules, et obtenir une intensité du signal de synchronisation dans le but de découvrir le deuxième dispositif terminal (92) par le biais du signal de synchronisation, le deuxième dispositif terminal acquérant des informations paramétriques concernant l'envoi du signal de synchronisation et envoyant le signal de synchronisation sur la base des informations paramétriques, les informations paramétriques comprenant des informations concernant l'envoi du signal de synchronisation, et le signal de synchronisation envoyé par le deuxième dispositif terminal (92) étant l'un des signaux de synchronisation de la ou des cellules ;
une première unité de détermination (63), configurée pour déterminer, sur la base de l'intensité du signal de synchronisation, si une connexion réseau D2D peut être établie ou pas entre le premier dispositif terminal (91) et le deuxième dispositif terminal (92) ; et
une première unité d'envoi (64), configurée pour envoyer, à la station de base (93), un résultat de détermination, et envoyer, à la station de base (93), l'intensité du signal de synchronisation,
la première unité de détection (62) comprenant :
un premier module d'acquisition d'emplacement de ressource temps-fréquence (621), configuré pour acquérir, sur la base de l'identifiant du deuxième dispositif terminal (92), l'emplacement d'une ressource temps-fréquence auquel le deuxième dispositif terminal (92) envoie le signal de synchronisation ; et
un premier module de détection (623), configuré pour détecter le signal de synchronisation et acquérir une intensité du signal de synchronisation à la ressource temps-fréquence, sur la base des informations concernant les signaux de synchronisation de la cellule où le premier dispositif terminal (91) ou le deuxième dispositif terminal (92) fonctionne, la cellule où le premier dispositif terminal (91) ou le deuxième dispositif terminal (92) fonctionne étant l'une de la ou des cellules, et
la première unité de détermination (63) étant configurée pour :
déterminer, sur la base de l'intensité obtenue du signal de synchronisation, si le premier dispositif terminal (91) et le deuxième dispositif terminal (92) fonctionnent ou pas dans une zone de couverture d'une même station de base ou d'une même cellule ; la première unité d'envoi (64) étant configurée pour envoyer, à la station de base, en tant que résultat de détermination, les informations d'instruction indiquant si le premier dispositif terminal (91) et le deuxième dispositif terminal (92) fonctionnent ou pas dans une zone de couverture d'une même station de base ou d'une même cellule.

6. Deuxième dispositif terminal (92), comprenant :
une deuxième unité d'acquisition (71), configurée pour acquérir des informations paramétriques concernant l'envoi d'un signal de synchronisation, le signal de synchronisation étant l'un de signaux de synchronisation d'une ou de plusieurs cellules au sein d'une station de base (93), et la station de base étant une station de base où un premier dispositif terminal (91) ou le deuxième dispositif terminal (92) réside, les informations paramétriques comprenant des informations concernant l'envoi du signal de synchronisation ;
une deuxième unité d'envoi (72), configurée pour envoyer le signal de synchronisation sur la base des informations paramétriques, de sorte que le premier dispositif terminal détecte le signal de synchronisation et obtienne l'intensité du signal de synchronisation à une ressource temps-fréquence, qui est acquise par le premier dispositif terminal sur la base d'un identifiant du deuxième dispositif terminal, sur la base des informations concernant les signaux de synchronisation de la cellule où le premier dispositif terminal ou le deuxième dispositif terminal fonctionne, détermine, sur la base de l'intensité obtenue du signal de synchronisation, si le premier dispositif terminal et le deuxième dispositif terminal fonctionnent ou pas dans une zone de couverture d'une même station de base ou d'une même cellule, et envoie, à la station de base, en tant que résultat de détermination, des informations d'instruction indiquant si le premier dispositif terminal et le deuxième dispositif terminal fonctionnent ou pas dans une zone de couverture d'une même station de base ou d'une même cellule, et envoie, à la station de base, l'intensité du signal de synchronisation.

7. Deuxième dispositif terminal (92) selon la revendication 6, dans lequel les informations paramétriques comprennent en outre une période d'émission et/ou une puissance d'émission pour l'envoi du signal de synchronisation ; la deuxième unité d'envoi (72) étant configurée pour :
envoyer périodiquement le signal de synchronisation au sein d'une période de temps sur la base de la période d'émission et/ou de la puissance d'émission.

8. Deuxième dispositif terminal (92) selon la revendication 6, lequel deuxième dispositif terminal (92) comprend en outre :
une première unité de réception (73), configurée pour recevoir un message de radiomessagerie unilatérale envoyé par la station de base (93), le message de radiomessagerie unilatérale servant à notifier au deuxième dispositif terminal (92) que le premier dispositif terminal (91) et le deuxième dispositif terminal (92) sont autorisés à se connecter selon un mode D2D ;
une première unité de connexion (74), configurée pour établir une connexion de commande de ressources radio avec la station de base (93) sur la base de la cellule où le premier dispositif terminal (91) ou le deuxième dispositif terminal (92) fonctionne en cas de réception du message de radiomessagerie unilatérale.
